Europäisches Patentamt

European Patent Office

Office européen des brevets

(11) Veröffentlichungsnummer: **0 298 287**
**A1**

## (12) EUROPÄISCHE PATENTANMELDUNG

(21) Anmeldenummer: 88109717.4

(51) Int. Cl.4: **A61C 13/265**

(22) Anmeldetag: 17.06.88

(30) Priorität: 07.07.87 DE 3722326

(43) Veröffentlichungstag der Anmeldung:
11.01.89 Patentblatt 89/02

(84) Benannte Vertragsstaaten:
**BE DE ES FR GB IT**

(71) Anmelder: **Nova-Pro Attachment GmbH**
**Lindenstrasse 18**
**D-5882 Meinerzhagen(DE)**

(72) Erfinder: **Speckmann, Frank**
**Karl-Halle-Strasse 101**
**D-5800 Hagen(DE)**

(74) Vertreter: **Hassler, Werner, Dr.**
**Postfach 17 04 Asenberg 62**
**D-5880 Lüdenscheid(DE)**

(54) **Rundgeschiebe für Zahnprothesen.**

(57) Ein Rundgeschiebe für Zahnprothesen, aus einer in einen Restgebißaufbau eingießbaren Matrize mit zylindrischer Aufnahme und aus einem Anker als Patrize mit einen radial aufweitbaren Hülsenteil, an dessen Stirnrand eine Spannschraube mit vom Kopf zum Schaft sich verjüngender Spannfläche angreift. Das technische Problem ist ein paßgenauer Einbau in den Restgebißaufbau, eine leichte Austauschbarkeit der Verschleißteile und eine genaue und einfache Einstellung der Friktion. Die Patrize (2) besteht aus einem zähelastischen, die Form haltenden, reibfesten Kunststoff. Ein Ringmantel (11) der Patrize (2) weist eine innere, sich gegen die Stirnfläche erweiternde Konusfläche (12) auf. Der Ringmantel (11) weist auch eine äußere Konusfläche (13) auf, die sich gegen die Stirnfläche verjüngt. Der Kopfdurchmesser der Spannschraube (16) ist größer als der stirnseitige Druchmesser der inneren Konusfläche (12).

Fig. 5

EP 0 298 287 A1

## Rundgeschiebe für Zahnprothesen

Die Erfindung betrifft ein Geschiebe für Zahnprothesen, aus einer in einen Restgebißaufbau eingießbaren Matrize mit zylindrischer Aufnahme und aus einem Anker als Patrize mit einem radial aufweitbaren Hülsenteil, an dessen Stirnrand eine Spannschraube mit vom Kopf zum Schaft sich verjüngender Spannfläche angreift.

Ein Rundgescheibe der genannten Art ist aus dem DE-GM 85 17 420 bekannt. Dort ist als Hülsenteil eine geschlitzte, aufweitbare Hülse aus Federwerkstoff vorgesehen. Diese Metallhülse bringt auch an der Matrize einen Verschleiß mit sich. Ein Verkanten beim Einführen der Patrize kann nicht ausgeglichen werden. Die Anbringung der Matrize an einem Restgebißaufbau ist sehr schwierig, weil ein entsprechendes ringförmiges Edelmetallteil an den Restgebißaufbau angelötet werden muß. Eine Beschädigung oder ein Verschleiß an der Matrize hat schwerwiegende Folgen, weil ein Austausch der Matrize kaum möglich ist. Ein Austausch von Verschleißteilen ist nur unter erheblichem Aufwand und entsprechenden Kosten möglich.

Ein Rundgeschiebe im wesentlichen gleicher Art ist in der CH-PS 528 260 oder der DE-OS 33 39 084 beschrieben.

Aufgabe der Erfindung ist ein paßgenauer Einbau in den Restgebißaufbau, eine leichte Austauschbarkeit der Verschleißteile und eine genaue und einfache Einstellung der Friktion.

Diese Aufgabe wird nach der Erfindung durch die Merkmale gelöst:

    a) die Patrize besteht aus einem zähelastischen, die Form haltenden, reibfesten Kunststoff;

    b) ein Ringmantel der Patrize weist eine innere, sich gegen die Stirnfläche erweiternde Konusfläche auf;

    c) der Ringmantel weist auch eine äußere Konusfläche auf, die sich gegen die Stirnfläche verjüngt;

    d) der Kopfdurchmesser der Spannschraube ist größer als der stirnseitige Durchmesser der inneren Konusfläche.

Die Erfindung unterscheidet sich insofern vom Stand der Technik, als die Matrize einstückig in den Restgebißaufbau integriert ist. Infolgedessen ist eine genaue und dauerhafte Ausrichtung gewährleistet. Die Matrize ist aus dem Gußmetall des Restgebißaufbaus ausgebildet und somit praktisch verschleißfrei. Die Patrize besteht aus einem die Form haltenden, zähelastischen, reibfesten Kunststoff wie Polyamid oder Polycarbonat, insbesondere einem verstärkten bzw. faserverstärkten Kunststoff. Die innere Konusfläche des Hülsenteils ermöglicht eine genaue Einstellung der Friktion, indem die Spannschraube entsprechend weit eingeschraubt wird. Schon beim Eintritt des Schraubenkopfes in die Stirnöffnung des Ringmantels wird der Stirnrand unter inelastischer Überdehnung aufgeweitet. Dadurch wird auch der Schraubenkopf geklemmt, so daß die Schraube gegen eine unbeabsichtigte Verstellung gesichert ist. Außerdem wird die innere Konusfläche aufgeweitet und der Ringmantel des Hülsenteils über seine ganze Länge gedehnt. Die Außenfläche des Hülsenteils wird nahezu zylindrisch über die gesamte axiale Länge des Hülsenteils gedehnt. Es erfolgt also eine inelastische Überdehnung des Werkstoffs. Bei weiterem Einschrauben wird das Hülsenteil mit zunehmender Einschraubtiefe fortgesetzt aufgeweitet. Man erhält so eine tonnenförmige Aufwölbung, so daß die Friktionskraft individuell und stufenlos eingestellt werden kann. Im Verschleißfall ist die Patrize leicht austauschbar.

Eine besonders günstige Funktion erhält man dadurch, daß die Differenz zwischen dem Kopfdurchmesser der Spannschraube und dem stirnseitigen Durchmesser der inneren Konusfläche dem Doppelten der Verjüngung der äußeren Konusfläche etwa gleich ist. Man erreicht so, daß nach dem Eintritt des Kopfteils der Spannschraube in die Stirnseite des Ringmantels derselbe so gedehnt wird, daß die Außenfläche des Ringmantels nahezu eine Zylinderform annimmt. Beim weiteren Einschrauben ergibt sich dann die tonnenförmige Aufwölbung oder Profilierung der Außenfläche des Ringmantels.

Die Einführung der Patrize wird dadurch erleichtert, daß der Ringmantel auf der Außenseite einen Einführungskonus mit größerem Konuswinkel aufweist. Damit kann auch bei einem verkantenden Einsetzen der Patrize keine Beschädigung auftreten, da der Kunststoffwerkstoff rückstellfähig ist und sich entsprechend verformen kann.

Ein noch besseres Einführen der Geschiebteile ist dadurch möglich, daß der Durchgang der Matrize eine trichterförmige Erweiterung aufweist.

Für das Eingießen der Matrize in eine Zahnkrone oder einen anderen Restgebißaufbau schlägt die Erfindung vor, daß das Eingießteil der Matrize aus einem rückstandlos verbrennbaren Kunststoff besteht, damit dieses Eingießteil nach Einbettung in das Gußmodell beim Gießvorgang vollständig verbrennt und durch das Gußmetall ausgefüllt wird. Das Eingießteil der Matrize kann in das Modell des Restgebißaufbaus einmodelliert werden. Beim Gießvorgang wird das Modell in eine Einbettmasse eingebettet. Das Eingießteil wird zusammen mit dem Modell ausgebrannt und von der Gußmasse normalerweise einem Edelmetall vollständig und formfüllend ausgefüllt. Die Matrize ist nach diesem Gießvorgang in dem Gußmetall ausgebildet.

Eine Ausführungsform der Erfindung wird im folgenden unter Bezugnahme auf die Zeichnung erläutert, in der darstellen:

Fig. 1 eine teilweise geschnittene Ansicht der Matrize,

Fig. 2 eine Draufsicht zu Fig. 1 mit der Einbettung in das Gußmodell,

Fig. 3 die Patrize zur Hälfte geschnitten

Fig. 4 einen Schnitt mit eingesetzter Spannschraube,

Fig. 5 eine vergrößerte Einzeldarstellung der ungespannten Patrize in Verbindung mit der Matrize,

Fig. 6 den normalen Spannzustand der Patrize und

Fig. 7 einen Nachspannzustand der Patrize.

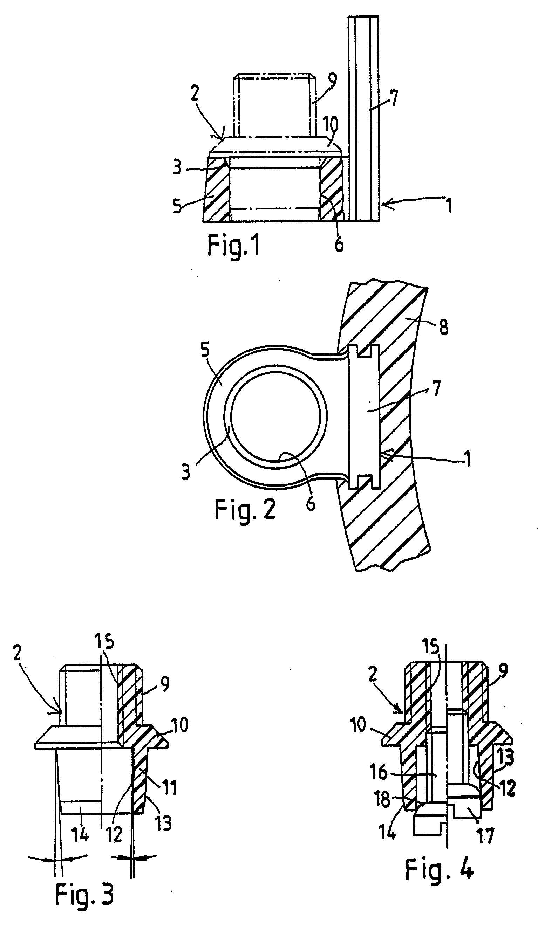

Die Fig. 1 und 2 zeigen das Eingießteil 1 einer Matrize. Dieses Eingießteil besteht aus einem rückstandlos verbrennbaren Kunststoff wie einem Polyamid oder einem Polycarbonat. Das Eingießteil 1 umfaßt einen augenartigen Ansatz 5 mit einem zylindrischen Durchgang 6. Der Durchgang 6 hat an dem Einführungsende eine trichterförmige Erweiterung 3. An dem augenartigen Ansatz 5 sitzt ein profilierter Steg 7 zur Einformung in eine Modelliermasse 8 eines Restgebißaufbaus. Die Modelliermasse 8 hat eine wachsartige Konsistenz.

Das Eingießteil 1 wird vom Zahntechniker bei der Modellierung in das Modell des Restgebißaufbaus eingeformt. Dabei erfolgt eine Ausrichtung des augenartigen Ansatzes 5 in einem Parallelgerät oder in anderer Weise. Das Eingießteil 1 wird zusammen mit der Modelliermasse 8 in eine Gießform eingesetzt und im Zuge des Gusses zusammen mit der Modelliermasse 8 rückstandfrei ausgebrannt. Das Eingießteil 1 ist an dem fertigen Restgebißaufbau vollständig durch Gußmetall nachgebildet. Die Formgebung des Eingießteile 1 liefert also die Gestalt des Gußteils der Matrize an dem Restfebißaufbau. Die Matrize hat so genau die Form des Eingießteils 1 und sitzt einstückig an dem Restgebißaufbau. Das in Fig. 1 dargestellte Eingießteil 1 ist also auch eine Darstellung der Matrize an dem Restgebißaufbau.

Zu dem vollständigen Rundgeschiebe gehört eine Patrize 2 aus einem verstärkten Kunststoff. Hierbei handelt es sich z. B. um einen Kunststoff auf Polyamidbasis oder Polycarbonatbasis, der einen Füllstoff enthält, insbesondere einen Faserstoff wie Glasfasern, um die Festigkeit des Kunststoffes zu erhöhen. Dieser Kunststoff, der durch Spritzgießen formbar ist, ist zähelastisch und reibfest und außerdem formhaltig, so daß er unter Belastung seine Form elastisch ändert und bei Nachlassen der Belastung die ursprüngliche Form wieder einnimmt.

Die Patrize 2 umfaßt einen Gewindeanker 9 zur Halterung in einem Muttergewinde eines Prothesenteils. An den Gewindeanker 9 schließt sich ein Ringteil 10 an, das eine Auflagefläche auf dem Stirnrand der Matrize festlegt. Von dem Ringteil 10 setzt sich ein an der Stirnseite offener Ringmantel 11 mit einer inneren, sich gegen die Stirnfläche erweiternden Konusfläche 12 und einer äußeren, sich gegen die Stirnfläche verjüngenden Konusfläche 12 fort. Die Wandstärke des Ringmantels 11 wird also gegen die Stirnfläche hin kontinuerlich geringer. Am Stirnende der äußeren Konusfläche 13 befindet sich ein Einführungskonus 14 mit größerem Konuswinkel als die äußere Konusfläche 13.

In dem Gewindeanker 9 ist eine Innengewinde 15 für eine Spannschraube 16 ausgebildet. Die Spannschraube 16 hat einen Kopf 17 mit einer Konusfläche 18. Der Kopfdurchmesser der Spannschraube 16 ist um den doppelten Betrag der Verjüngung der äußeren Konusfläche 13 größer als der stirnseitige Durchmesser der inneren Konusfläche 12. Unter Verjüngung ist die Differenz zwischen dem größten, stirnseitigen Radius und dem kleinsten, fußseitigen Radius der Konusfläche verstanden.

Fig. 4 zeigt in der linken Hälfte die Spannschraube 16 vor dem Eintritt des Kopfes in den Ringmantel 11. Beim ersten Einschrauben der Spannschraube 16 wird der Ringmantel, insbesondere der Stirnrand, durch den Kopf inelastisch überdehnt und dadurch aufgeweitet. Dadurch wird der Kopf der Spannschraube geklemmt. Infolge der zuvor erläuterten Größen der Spannschraube und der Konizität wird die äußere Konusfläche 13 in eine Zylinderform gebracht. Die innere Konusfläche 12 erhält dadurch eine größere Konizität, wie man der rechten Hälfte der Fig. 4 entnimmt. Je weiter die Spannschraube 16 eingeschraubt wird, umso größer ist die örtliche Aufweitung des Ringmantels an der Kopfkante der Spannschraube. Man erhält so ein tonnenförmiges Außenprofil des Ringmantels. Dieses beruht auf der Geometrie der Konusflächen des Ringmantels 11. Dadurch läßt sich die Friktionskraft der Patrize in dem Durchgang 6 der Matrize stufenlos und genau einstellen. Eine Nachstellung ist jederzeit möglich. Wenn einmal die Patrize abgenutzt ist, ist auch ein Austausch jederzeit möglich.

Fig. 1 zeigt in strichpunktierten Linien die Patrize 2, die in den Durchgang 6 der Matrize 1 eingeschoben ist. Die Einführung wird durch den Einführungskonus 14 und die Erweiterung 3 begünstigt. Die Friktionskraft der Patrize 2 kann durch Eindrehen der Spannschraube 16 kontinuierlich nach dem Bedürfnis des Prothesenträgers eingestellt werden. Eine Nachstellung ist durch den Zahnarzt oder den Zahntechniker jederzeit möglich. Beim Eindrehen der Spannschraube 16 wird der Ringmantel 11 zunehmend aufgeweitet, so daß eine Nachstellung über einen weiten Bereich möglich ist. Ein abgenutzte oder beschädigte Patrize kann jederzeit ausgetauscht werden.

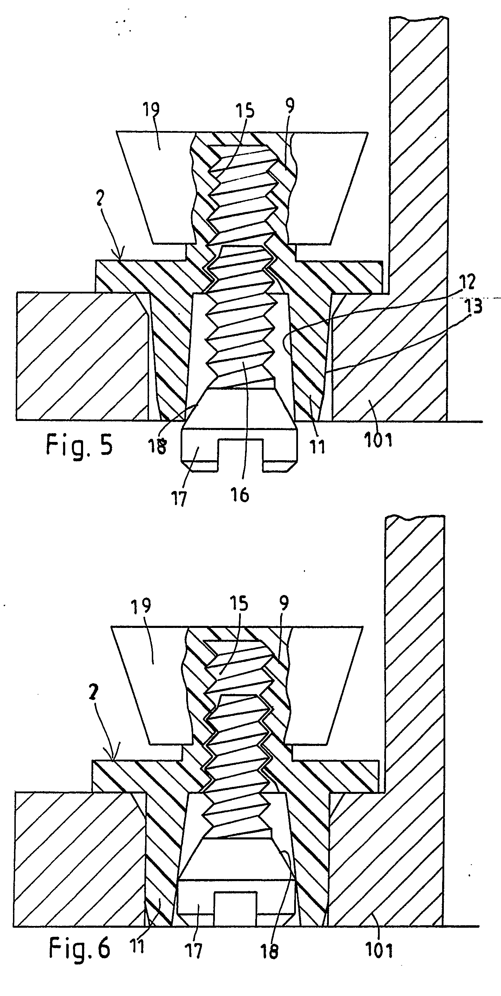

Die Fig. 5 bis 7 zeigen nochmals in Einzelheiten die Eingriffsverhältnisse. Es ist die Matrize 101 des Gußteils des Restgebisses dargestellt. Diese Matrize 101 ist eine Gußnachbildung des Eingießteils 1 gemäß Fig. 1, wie zuvor erläutert worden. Die Patrize 2 ist in Fig. 5 in unverformtem Zustand dargestellt, so daß man die verschiedenen Konusflächen deutlich erkennt. Die Spannschraube 16 ist leicht in das Innengewinde 15 eingeschraubt. Die Patrize 2 sitzt in dem Gewinde einer Eingießmutter 19, die in die Prothese eingegossen ist. Dieses ist im einzelnen nicht erläutert. Man erkennt in Fig. 5 deutlich, daß Schraubenkopf einen größeren Durchmesser als der innere Stirnrand des Hülsenteils 11 hat. In diesem Zustand ist ein Spiel zwischen der Patrize 2 und der Matrize 101 vorhanden, so daß die Patrize nicht mit genügender Kraft festgehalten wird.

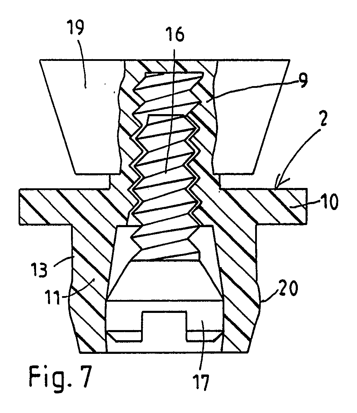

An der Prothese läßt sich die Friktionskraft genau einstellen. Zunächst wird die Spannschraube 16 im ein geringes Maß eingeschraubt. Dabei weitet sich gemäß Fig. 6 zunächst der Stirnrand und damit auch das gesamte Hülsenteil inelastisch auf, so daß die äußere Konusfläche im wesentlichen eine Zylinderform annimmt. Dieser Zustand ist in Fig. 6 dargestellt. Der Zahntechniker bzw. der Zahnarzt muß ausprobieren, ob die Friktion und damit auch die Haltekraft in diesem Zustand für eine Halterung der Prothese ausreicht. Durch weiteres Einschrauben der Spannschraube 16 läßt sich die Friktion stufenlos vergrößern. Man erkennt in Fig. 7 einen Zustand, wonach die Spannschraube 16 weiter eingeschraubt ist. Die Kopfkante der Spannschraube weitet den Hülsenteil örtlich auf, so daß man eine tonnenförmige Profilierung 20 oder Aufwölbung der Außenfläche erhält, wie dies in Fig. 7 deutlich zu erkennen ist. Dadurch läßt sich die Friktionskraft jederzeit in dem gewünschten Umfang nachstellen.

## Ansprüche

1. Rundgeschiebe für Zahnprothesen, aus einer in einen Restgebißaufbau eingießbaren Matrize mit zylindrischer Aufnahme und aus einem Anker als Patrize mit einen radial aufweitbaren Hülsenteil, an dessen Stirnrand eine Spannschraube mit vom Kopf zum Schaft sich verjüngender Spannfläche angreift, gekennzeichnet durch folgende Merkmale:

a) die Patrize (2) besteht aus einem zähelastischen, die Form haltenden, reibfesten Kunststoff;

b) ein Ringmantel (11) der Patrize (2) weist eine innere, sich gegen die Strinfläche erweiternde Konusfläche (12) auf;

c) der Ringmantel (11) weist auch eine äußere Konusfläche (13) auf, die sich gegen die Stirnfläche verjüngt;

d) der Kopfdurchmesser der Spannschraube (16) ist größer als der stirnseitige Durchmesser der inneren Konusfläche (12).

2. Rundgeschiebe nach Anspruch 1, dadurch gekennzeichnet, daß die Differenz zwischen dem Kopfdurchmesser der Spannschraube (16) und dem strinseitigen Durchmesser der inneren Konusfläche (12) etwa dem Doppelten der Verjüngung der äußeren Konusfläche (13) gleich ist.

3. Rundgeschiebe nach Anspruch 1 oder 2, dadurch gekennzeichnet, daß der Ringmantel (11) auf der Außenseite einen Einführungskonus (14) mit größerem Konuswinkel aufweist.

4. Rundgeschiebe nach einem der Ansprüche 1 bis 3, dadurch gekennzeichnet, daß der Durchgang (6) der Matrize eine trichterförmige Erweiterung (3) aufweist.

5. Rundgeschiebe nach einem der Ansprüche 1 bis 3, dadurch gekennzeichnet, daß das Eingießteil (1) der Matrize aus einem rückstandlos verbrennbaren Kunststoff besteht, damit dieses Eingießteil nach Einbettung in das Gußmodell beim Gießvorgang vollständig verbrennt und durch das Gußmetall ausgefüllt wird.

Fig.1

Fig. 2

Fig. 3

Fig. 4

Fig. 5

Fig. 6

Nova-Pro

A 88055

A 88 055

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-U-8 517 417 (JANZEN) --- | | A 61 C 13/265 |
| A | US-A-2 271 796 (ECKMAN) --- | | |
| A | DE-A-2 217 088 (KONDZIOLKA) --- | | |
| A | FR-A-1 493 268 (CLEVELAND) ----- | | |

RECHERCHIERTE
SACHGEBIETE (Int. Cl.4)

A 61 C

Der vorliegende Recherchenbericht wurde für alle Patentansprüche erstellt

| Recherchenort | Abschlußdatum der Recherche | Prüfer |
|---|---|---|
| DEN HAAG | 12-10-1988 | VANRUNXT J.M.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)